# EUROPÄISCHE PATENTSCHRIFT

(11) **EP 3 374 649 B1**
(45) Veröffentlichungstag und Bekanntmachung des Hinweises auf die Patenterteilung: **13.07.2022**
(21) Anmeldenummer: 16794985.8
(22) Anmeldetag: 08.11.2016
(51) Int. Cl.: F16B 25/00, F16B 25/10

(54) **GEWINDEFORMENDE SCHRAUBE**
THREAD-FORMING SCREW
VIS AUTOTARAUDEUSE

(30) Priorität: 12.11.2015 DE 102015222281
(43) Veröffentlichungstag der Anmeldung: 19.09.2018
(73) Patentinhaber: Arnold Umformtechnik GmbH & Co. KG, 74670 Forchtenberg-Ernsbach (DE)
(72) Erfinder: VOGEL, Georg, 74653 Ingelfingen-Eberstal (DE); BÜCHLE, Jan, 74629 Pfedelbach (DE)
(74) Vertreter: Patentanwälte Ruff, Wilhelm, Beier, Dauster & Partner mbB
(86) Internationale Anmeldenummer: PCT/EP2016/076941
(87) Internationale Veröffentlichungsnummer: WO 2017/080983

(56) Entgegenhaltungen:
- EP-A1- 0 761 992
- EP-A1- 0 939 235
- EP-A2- 1 925 828
- DE-A1- 19 525 732
- DE-A1-102007 024 240
- DE-B1- 1 400 229
- US-A1- 2003 210 970
- US-A1- 2013 039 720

## Beschreibung

Die Erfindung geht aus von einer gewindeformenden Schraube zum Einschrauben in duktile Materialien, nämlich Blech.

In vielen Fällen werden Schrauben an Montagestellen verwendet, an denen das Loch zum Anbringen der Schraube noch nicht vorhanden ist. Um das getrennte Herstellen des Lochs zu vereinfachen, sind Schrauben entwickelt worden, die an ihrem vorderen Ende eine Bohrschneide aufweisen, sodass das Loch mit der Schraube selbst hergestellt werden kann. Die Schraube schneidet sich dann anschließend in das von ihr selbst hergestellte Loch auch das Gewinde. Solche Schrauben sind dann sinnvoll, wenn die dabei anfallenden Schneidspäne entweder entfernt werden können oder nicht stören.

Um auch dort, wo Schneidspäne stören, das Herstellen des Lochs und das Einformen des Gewindes zu erleichtern, gibt es Schrauben, die sich das Loch, in das sie eingeschraubt werden, durch Formen herstellen. Diese Möglichkeit ist vor allem bei Blechen, insbesondere dünnen Blechen, von Interesse. Das Loch wird durch die bei der Rotation der Schraube entstehende Reibungswärme, die das Blech erweicht, hergestellt. Dabei wird gleichzeitig ein Durchzug erzeugt.

Bei einer bekannten Schraube dieser Art ist vorgesehen, dass das von dem Schraubenkopf abgewandte vordere Ende des Schraubenschaftes glatt, also ohne Gewinde ausgebildet ist und eine abgerundete Spitze aufweist. Die Länge des gewindefreien Schaftabschnitts ist größer als der mit Gewinde versehene Teil des Schafts. In dem glatten Abschnitt kann der Schaft einen abgerundet viereckigen Querschnitt aufweisen (DE 3909 725 C1).

Bei einer weiteren loch- und gewindeformenden Schraube ist ebenfalls ein vorderer glatter in seinem Durchmesser vom vorderen Ende aus zunehmender Abschnitt vorgesehen, der in einer ebenen Stirnfläche endet. Der glatte Abschnitt kann abgerundete gewindeartig verlaufende Rippen aufweisen (DE 10 2006 034 583 A1).

Bei einer ähnlichen Schraube ist an das vordere stumpfe Ende des gewindefreien glatten Abschnitts eine zusätzliche kegelförmige Spitze angesetzt (DE 10 2006 034 585 A1).

Bei einer nochmals weiteren gewindeformenden Schraube ist ebenfalls ein vorderer gewindefreier Formabschnitt vorgesehen, dessen Querschnitt sich in Richtung auf die abgerundete Schraubenspitze verringert. Der Querschnitt des gewindefreien Formabschnitts ist dabei trilobular (DE 10 2008 033 509 A1, DE 10 2010 000 702 A1).

Weiterhin ist eine Schraubverbindung mit einer Schraube bekannt, die eine gewindefreie Spitze mit der Grundform eines ausgewölbten Kegels aufweist, der an vier Seiten derart abgeflacht ist, dass die Abflachungen zwischen sich Kanten bilden (DE 298 01813 U1).

Allen diesen bekannten Lösungen ist gemeinsam, dass sie das durch Reibungshitze plastisch gemachte Blech durchdringen und bei der Erweiterung des einmal erzeugten Lochs einen längeren gewindefreien und damit glatten sich erweiternden Abschnitt vorsehen. Weitere Maßnahmen bestehen in der Anordnung von in Axialrichtung verlaufenden Rippen oder Kanten, die mehr oder weniger stark ausgeprägt sind, und in einer Variation des Längsprofils, das eingebaucht oder ausgebaucht sein kann.

Nun gibt es aber auch Anwendungsfälle, in denen ein Loch in einem Blechelement schon vorhanden ist, in das eine Schraube eingeschraubt werden soll, die sich ihr Gewinde selbst bildet. Gerade bei sehr dünnen Blechen besteht nun aber die Schwierigkeit, dass das Blech zu dünn ist, um eine ausreichende Haltekraft bzw. Überdrehfestigkeit einer Schraube zu erreichen. Wenn eine Schraube mit einem Schrauber eingeschraubt wird, erhöht sich kurz vor Anschlag des Schraubenkopfs das Drehmoment ruckartig, sodass hier eine hohe Überdrehfestigkeit der Schraube benötigt wird.

Weiter ist eine gewindeformende Blechschraube bekannt, bei der das Schraubengewinde nicht ganz bis zum vorderen Ende reicht und bei der das vordere Ende abgerundet ausgebildet ist (US 2003/0210970 A1).

Eine gewindeformende Schraube für Blech ist weiter bekannt, die ein ebenes, dem Kopf gegenüberliegendes Schraubenende aufweist, von dem ausgehend sich ein Formabschnitt mit ansteigender Gewindeflankenhöhe erstreckt. Anschließend an den Formabschnitt in Richtung auf den Schraubenkopf zu weist das Gewinde dann einen konstanten Außendurchmesser auf. Der Schaft der Schraube hat einen nicht kreisrunden Querschnitt. Ein solcher Querschnitt ist aus konvex gekrümmten Kanten gebildet, die mittels ebenfalls abgerundeter Übergänge mit kleinerem Radius miteinander verbunden sind (DE 1 400 229).

Eine Schraube, die auch für die Anwendung als Blechschraube geeignet ist, ist weiterhin aus der EP 1 925 828 A2 bekannt.

Der Erfindung liegt die Aufgabe zu Grunde, eine gewindeformende Schraube zu schaffen, die auch bei dünnem Blech eine ausreichende Haltekraft und Überdrehfestigkeit aufweist.

Zur Lösung dieser Aufgabe schlägt die Erfindung eine Schraube mit den im Anspruch 1 genannten Merkmalen vor. Weiterbildungen der Erfindung sind Gegenstand von Unteransprüchen.

Während die bekannten Schrauben, die überwiegend bei ungelochtem Blech verwendet werden, zur Erweiterung des Lochs einen glatten gewindefreien Abschnitt verwenden, ist bei der von der Erfindung vorgeschlagenen Schraube, die in erster Linie für gelochtes Blech vorgesehen ist, das Gewinde bis zu dem vorderen, gegebenenfalls abgerundeten, Schraubenende durchgehend ausgebildet. Der Schaft der Schraube weist einen vorderen Formabschnitt auf, in dem der Querschnitt des Schafts insbesondere kontinuierlich in Richtung auf das vordere Schraubenende abnimmt. Dieser vordere Formabschnitt dient zusammen mit dem auch hier vorhandenen ausgebildeten Gewinde dazu, den Rand des vorhandenen Lochs zu formen. Dazu gehört natürlich in erster Linie das Ausbilden des Gegengewindes in dem Rand des Lochs. An den vorderen Formabschnitt schließt sich in Richtung vom vorderen Schraubenende auf den Schraubenkopf zu gesehen dann ein Schraubenabschnitt an, in dem der Schaft zylindrisch ausgebildet ist, also einen konstanten Querschnitt aufweist. Im Formabschnitt ist mindestens eine Rippe ausgebildet, die das Schraubengewinde schneidet. Diese Rippe bildet eine Art Gegengewinde zu dem Schraubengewinde, wobei dieses Gegengewinde nur teilweise und unvollständig ausgebildet ist. Es hat sich überraschenderweise herausgestellt, dass durch diese Maßnahme der Blechwerkstoff parallel zur Vorschubrichtung der Schraube verdrängt wird und so einen Einschraubkragen bzw. Durchzug bildet. Dieser Einschraubkragen erhöht, je nachdem, wie lang er ausgebildet ist, die Haltekraft der Verbindung, da mehr Platz für das Gegengewinde und damit für das Eingreifen des Schraubengewindes in das Gegengewinde vorhanden ist. In Abhängigkeit einer Orientierung der mindestens einen Rippe zum Schraubengewinde wird das Material nur in Vorschubrichtung oder auch entgegen der Vorschubrichtung verdrängt. Die erfindungsgemäße Schraube ist zum Einschrauben in duktile Materialien, nämlich Blech, vorgesehen, also Materialien, die sich plastisch verformen, bevor sie versagen, beispielsweise brechen.

In Weiterbildung der Erfindung verläuft die Rippe schräg zur Längsachse.

Auf diese Weise kann eine Materialverdrängung parallel zur Vorschubrichtung der Schraube begünstigt werden.

In Weiterbildung der Erfindung verläuft die Rippe in umgekehrte Orientierung zu der Orientierung des Schraubengewindes.

Auf diese Weise kann erreicht werden, dass eine Materialverdrängung hauptsächlich in Vorschubrichtung erfolgt. Beim Eindrehen der Schraube bleibt somit die dem Schraubenkopf zugewandte Oberfläche annähernd plan und der entstehende Einschraubkragen beziehungsweise Durchzug erstreckt sich hauptsächlich in Vorschubrichtung. Zu Beginn des Einschraubvorgangs findet immer eine minimale Materialverdrängung entgegen der Vorschubvorrichtung statt. Die dem Schraubenkopf zugewandte Oberfläche bleibt somit nicht absolut plan sondern es bildet sich eine minimale, ringförmige Erhebung entgegen der Vorschubvorrichtung aus.

In Weiterbildung der Erfindung ist ein Winkel (γ) zwischen der Rippe und dem Schraubengewinde größer als 0° und kleiner als 180°. Solange die mindestens eine Rippe das Schraubengewinde schneidet, bildet sich ein Einschraubkragen beziehungsweise Durchzug.

Als besonders vorteilhaft hat sich bei umgekehrter Orientierung des Schraubengewindes und der Rippe ein Winkel von 55° zwischen der Schraubenachse und der Rippe herausgestellt. Besonders vorteilhafte Effekte der Rippe sind bei einem Winkel zwischen 40 und 70° zur Schraubenachse bei umgekehrter Orientierung von Rippe und Schraubengewinde vorhanden.

Es ist erfindungsgemäß vorgesehen, dass die das unvollständige gegenläufige Gewinde bildende Rippe steiler als das Gewinde verläuft, beispielsweise in einem Winkel von etwa 30 bis 60 Grad gegenüber der Längsachse der Schraube.

Es wurde erwähnt, dass das Schraubengewinde bis zu dem vorderen Schraubenende reicht bzw. unmittelbar an dem vorderen Schraubenende beginnt. Nach einem weiteren Merkmal der Erfindung kann nun vorgesehen sein, dass die Rippe mit einem axialen Abstand von dem vorderen Ende bzw. Beginn des Schraubengewindes beginnt. Am vorderen Ende der Schraube ist also zunächst ein Abschnitt des Schraubengewindes ausgebildet, in dem es keine Rippe gibt.

In Weiterbildung der Erfindung kann vorgesehen sein, dass die das unvollständige Gegengewinde bildende Rippe vor dem Übergang des Formabschnitts in den zylindrischen Abschnitt des Schafts endet, also auch dort einen Abstand aufweist. Die erwähnte Verdrängung des Blechwerkstoffs zur Bildung des Einschraubkragens ist dann nicht mehr erforderlich oder sinnvoll, wenn das Loch bereits fast seine endgültige Größe erreicht hat. Daher ist es sinnvoll, die Rippe mit Abstand vor dem Beginn des zylindrischen Abschnitts des Schafts enden zu lassen.

Beispielsweise kann in Weiterbildung vorgesehen sein, dass sich die Rippe über zwei bis vier Gewindegänge des Schraubengewindes erstreckt.

Es wurde erwähnt, dass es sich bei der Rippe um eine Art unvollständig ausgebildetes Gegengewinde handelt. Nach einem weiteren Merkmal kann vorgesehen sein, dass auch die Höhe der Rippe kleiner ist als die Gewindehöhe des Gewindes, so dass das Gewinde eine nicht unterbrochene deutlich ausgeprägte Gewindekante zeigt. Beispielsweise ist die Höhe der Rippe etwa halb so groß wie die Gewindehöhe des Schraubengewindes.

Die Schraube kann einen durchgehend kreisförmigen Querschnitt aufweisen. Es ist aber ebenfalls möglich und liegt im Rahmen der Erfindung, dass sie einen trilobularen Querschnitt aufweist, wobei die Abweichung von der Kreisform über die Länge des Schraubenschafts unterschiedlich sein kann. Eine trilobulare Schraubenform ist aus der eingangs genannten DE 10 2010 000 702 bekannt.

Wenn die Rippe, wie es hier als Möglichkeit vorgesehen wird, sich nur über eine kurze Länge des Schraubenschafts erstreckt, kann nach einem weiteren Merkmal der Erfindung vorgesehen sein, dass mehrere derartige Rippen vorgesehen sind, die beispielsweise untereinander gleich ausgebildet und gleichmäßig über den Umfang verteilt angeordnet sein können.

In Weiterbildung der Erfindung ist das vordere Schraubenende abgerundet, insbesondere halbkugelförmig abgerundet.

Erfindungsgemäß ist das Schraubengewinde als Blechgewinde ausgebildet.

Weitere Merkmale, Einzelheiten und Vorzüge der Erfindung ergeben sich aus den Ansprüchen, der folgenden Beschreibung einer bevorzugten Ausführungsform der Erfindung sowie anhand der Zeichnung. Einzelmerkmale der unterschiedlichen Ausführungsformen können dabei in beliebiger Weise kombiniert werden, ohne den durch die Ansprüche aufgespannten Rahmen der Erfindung zu verlassen. In der Zeichnung zeigen:
- Fig. 1: eine teilweise geschnittene Seitenansicht einer erfindungsgemäßen Schraube.
- Fig. 2: eine schematische Darstellung einer gewindeformenden Schraube nach dem Stand der Technik zusammen mit der Schnittansicht eines vorgelochten Bauteils vor und nach dem Eindrehen der gewindeformenden Schraube,
- Fig. 3: eine schematische Darstellung der erfindungsgemäßen gewindeformenden Schraube der Fig. 1 zusammen mit der Schnittansicht eines vorgelochten Bauteils vor und nach dem Eindrehen der gewindeformenden Schraube und
- Fig. 4: eine schematische Darstellung einer erfindungsgemäßen gewindeformenden Schraube gemäß einer weiteren Ausführungsform zusammen mit der Schnittansicht eines vorgelochten Bauteils vor und nach dem Eindrehen der gewindeformenden Schraube.

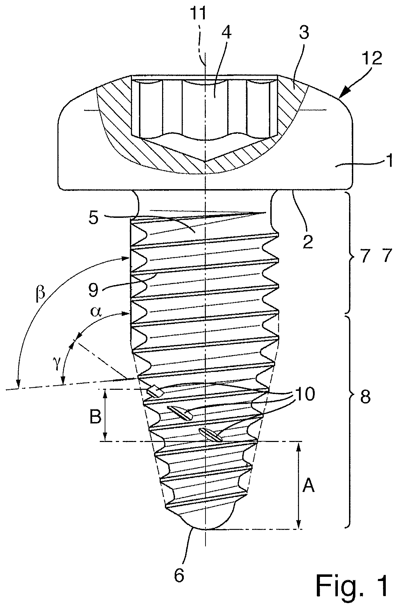

Die in Figur 1 dargestellte Schraube enthält einen Schraubenkopf 1 mit einer ebenen Unterseite 2. In der der ebenen Unterseite 2 gegenüberliegenden Stirnseite 3 ist eine Schraubenantriebsausbildung 4 in Form einer Vertiefung ausgebildet, bei der es sich um eine der üblichen, eine Drehmomentübertragung ermöglichenden Ausbildungen handelt. Von der Unterseite des Schraubenkopfs 1 aus erstreckt sich der Schraubenschaft 5 bis zu einem vorderen Ende 6, das etwa halbkugelförmig abgerundet ausgebildet ist.

Der Schraubenschaft 5 lässt sich grob in zwei Abschnitte unterteilen, nämlich einen von der Unterseite 2 des Schraubenkopfs 1 ausgehenden ersten zylindrischen Abschnitt 7 und einen sich daran anschließenden Formabschnitt 8, in dem der Schaft 5 einen kontinuierlich abnehmenden Querschnitt und Durchmesser aufweist. Man kann diesen Abschnitt 8 bei der dargestellten und beschriebenen Ausführungsform auch als kegelstumpfförmig bezeichnen.

Über die gesamte Länge des Schafts 5 erstreckt sich ein Schraubengewinde 9, das bis zum vorderen Schraubenende 6 durchgehend ausgebildet ist. Der Beginn des Schraubengewindes 9 am Schraubenende 6 befindet sich in der Darstellung der Fig. 1 dabei auf der dem Betrachter abgewandten Seite des Schafts 5 und ist nicht erkennbar.

Innerhalb des kegelförmigen Formabschnitts 8 ist bei der dargestellten Ausführungsform eine Rippe 10 ausgebildet, die sich über etwa drei Gewindegänge des Schraubengewindes 9 erstreckt. Die Rippe 10 verläuft in einer gegenüber der Orientierung des Schraubengewindes 9 umgekehrten Orientierung. Im dargestellten Ausführungsbeispiel ist das Gewinde 9 ein Rechtsgewinde, während die Rippe 10 etwa nach Art eines unvollständig ausgebildeten Linksgewindes angeordnet ist.

Die Steigung des durch die Rippe 10 gebildeten Gewindes ist deutlich größer als die Steigung des Schraubengewindes 9. Der Winkel α zwischen der Längsrichtung der Rippe 10 und der Längsachse der Schraube beträgt im dargestellten Beispiel etwa 55 Grad. Der Winkel γ zwischen der Längsrichtung der Rippe 10 und dem Schraubengewinde 9 beträgt etwa 40 Grad. Der Winkel β zwischen der Längsachse der Schraube und dem Schraubengewinde 9 beträgt etwa 95 Grad. Der Winkel γ ergibt sich aus der Differenz zwischen β und a.

Die Rippe beginnt, wenn man von dem vorderen Schraubenende 6 und dem Beginn des Schraubengewindes 9 ausgeht, erst in einem Abstand A von diesem vorderen Schraubenende 6, und sie endet vor dem Übergang des Formabschnitts 8 in den zylindrischen Abschnitt 7 des Schraubenschafts 5. Die axiale Länge B des Bereichs, in dem die Rippe 10 vorhanden ist, ist kleiner als der vordere rippenfreie Abschnitt A.

Wie man der Zeichnung ebenfalls entnehmen kann, ist die Höhe der Rippe 10, d.h. der radiale Abstand ihrer Außenkante von dem Gewindegrund des Schraubengewindes 9, kleiner als die Gewindehöhe des Schraubengewindes. Dadurch bleibt die Gewindekante des Gewindes 9 auch in dem Bereich B ungestört vorhanden.

Fig. 1 zeigt die Schraube von einer Seite. Auf der in der Figur nicht sichtbaren gegenüberliegenden Seite der Schraube kann eine gleiche Rippe 10 vorhanden sein.

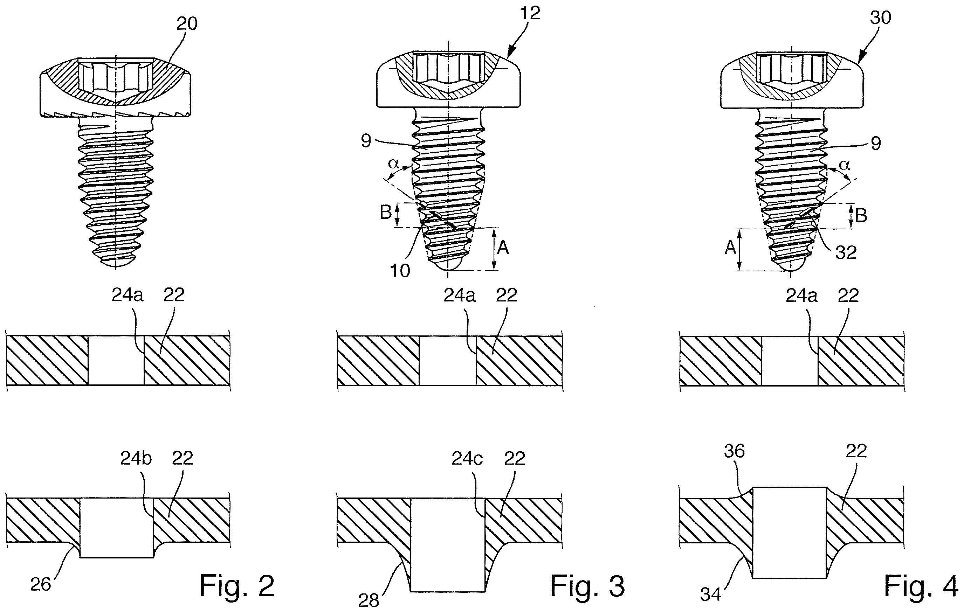

Die Darstellung der Fig. 2 zeigt eine gewindeformende Schraube 20 nach dem Stand der Technik. Es ist sofort zu erkennen, dass das Schraubengewinde dieser Schraube 20 keine Rippe aufweist, die das Schraubengewinde schneidet.

Fig. 2 zeigt schematisch weiter ein Bauteil 22, in dem eine vorbereitete Durchgangsöffnung 24a vorgesehen ist. In das Bauteil 22 beziehungsweise in die Durchgangsöffnung 24a wird die gewindeformende Schraube 20 eingedreht.

Fig. 2 zeigt weiter das Bauteil 22 schematisch nach dem Einschrauben der gewindeformenden Schraube 20. Die Durchgangsöffnung 24a ist nun zu einer Durchgangsöffnung 24b erweitert worden, die zum einen einen größeren Durchmesser und zum anderen eine größere Länge aufweist. Durch das Eindrehen der gewindeformenden Schraube 20 ist ein Durchzug 26 entstanden, der sich ausgehend von der ursprünglichen Form des Bauteils 22 in Vorschubrichtung der Schraube 20 erstreckt.

Der Durchzug 26 ist jedoch sehr kurz ausgebildet und kann, gerade bei Bauteilen 22 mit geringer Materialstärke, keine hohe Überdrehfestigkeit der Schraube 20 sicherstellen.

Die Darstellung der Fig. 3 zeigt die erfindungsgemäße gewindeformende Schraube 12, wie sie bereits in Fig. 1 dargestellt ist. Die Schraube 12 weist, wie bereits anhand der Fig. 1 erläutert wurde, die Rippe 10 auf, die sich in umgekehrter Orientierung zum Schraubengewinde 9 über etwa drei Gewindegänge des Schraubengewindes 9 erstreckt.

Fig. 3 zeigt wieder das Bauteil 22 mit der vorbereiteten Durchgangsöffnung 24a.

Weiter zeigt Fig. 3 das Bauteil 22, nachdem die erfindungsgemäße gewindeformende Schraube 12 eingedreht wurde. Die Durchgangsöffnung 24a ist durch das Eindrehen der erfindungsgemäßen gewindeformenden Schraube zu einer Durchgangsöffnung 24c erweitert worden, die gegenüber der Durchgangsöffnung 24a vor dem Eindrehen der Schraube einen größeren Durchmesser aufweist und auch eine größere Länge aufweist. Denn durch das Eindrehen der erfindungsgemäßen gewindeformenden Schraube wurde ein Durchzug 28 erzeugt, der gegenüber dem Durchzug 26 aus Fig. 2 eine wesentlich größere Länge aufweist. Bei der schematischen Darstellung der Fig. 3 ist die Länge des Durchzugs 28 etwa so groß wie die Materialstärke des Bauteils 22. Die erfindungsgemäße gewindeformende Schraube kann somit über wesentlich mehr Gewindegänge in Verbindung mit dem Bauteil 22 stehen, so dass eine sehr hohe Überdrehfestigkeit der erfindungsgemäßen Schraube sowie auch eine gegenüber der konventionellen Schraube deutlich verbesserte Haltekraft erzielt wird.

Die Vergrößerung des Durchzugs entsteht dabei durch die Wirkung der Rippe 10. Beim Eindrehen der erfindungsgemäßen gewindeformenden Schraube verdrängt die Rippe 10 Material im Bereich der Wandung der Durchgangsöffnung 24a in Vorschubrichtung, in Fig. 3 also nach unten. Dadurch verlängert sich der Durchzug 28 gegenüber dem Durchzug 26 der Fig. 2.

Die Darstellung der Fig. 4 zeigt eine weitere gewindeformende Schraube 30 gemäß der Erfindung. Die Schraube 30 ist prinzipiell gleich zu der erfindungsgemäßen Schraube 12 in Fig. 3 ausgebildet, lediglich eine Rippe 32 ist nicht wie bei der Schraube 12 in umgekehrter Orientierung zum Schraubengewinde 9, sondern in gleicher Orientierung wie das Schraubengewinde 9 angeordnet. Die Rippe 32 schließt somit mit einer Längsachse der Schraube 30 einen Winkel von -55° ein.

Beim Eindrehen der Schraube 30 in das Bauteil 22 wird die Durchgangsöffnung 24a dadurch nicht nur in ihrem Durchmesser vergrößert, sondern es bildet sich ein erster Durchzug 34 auf der dem Schraubenkopf abgewandten Unterseite des Bauteils 22 sowie auch ein zweiter Durchzug 36 auf der dem Schraubenkopf 30 zugewandten Seite des Bauteils 22. Beim Eindrehen der Schraube 30 wirkt die Rippe 32 dahingehend, dass Material von der Wandung der Durchgangsöffnung 24a entgegen der Vorschubrichtung nach oben verdrängt wird, so dass der Durchzug 36 gebildet wird. Gleichzeitig sorgt die Rippe 32 aber überraschenderweise auch dafür, dass der Durchzug 34 in Vorschubrichtung ausgebildet wird und dass der Durchzug 34 zwar kürzer ist als der Durchzug 28 der Fig. 3, aber immer noch länger ist als der Durchzug 26 der Fig. 2.

Sowohl mit der erfindungsgemäßen gewindeformenden Schraube 12 der Fig. 1 und Fig. 3 als auch der erfindungsgemäßen gewindeformenden Schraube 30 der Fig. 4 lässt sich somit gegenüber einer konventionellen gewindeformenden Schraube 20 gerade bei dünnem Blech eine deutlich größere Haltekraft und deutlich größere Überdrehfestigkeit erzielen, da durch die Ausbildung der Durchzüge 28 beziehungsweise 34, 36 mehr Gewindegänge des Schraubengewindes 9 in Eingriff mit dem Bauteil 32 stehen, nachdem die erfindungsgemäßen Schrauben 12, 30 vollständig in das Bauteil 22 eingedreht sind.

## Patentansprüche

1. Gewindeformende Schraube zum Einschrauben in duktile Materialien, nämlich Blech, mit einem Schraubenkopf (1), der eine Schraubenantriebsausbildung (4) aufweist, einem Schraubenschaft (5), der sich von dem Schraubenkopf (4) bis zu einem vorderen Schraubenende (6) erstreckt, sowie mit einem Schraubengewinde (9), das als Blechgewinde ausgebildet ist, wobei ein vorderer Formabschnitt (8) des Schraubenschafts (5) einen in Richtung auf das vordere Schraubenende (6) abnehmenden Querschnitt aufweist, wobei das Schraubengewinde (9) bis zu dem vorderen Schraubenende (6) reicht, wobei im Formabschnitt (8) mindestens eine Rippe (10; 32) ausgebildet ist, die das Schraubengewinde (9) schneidet und wobei die Rippe (10; 32) steiler als das Schraubengewinde (9) verläuft.

2. Gewindeformende Schraube nach Anspruch 1, **dadurch gekennzeichnet, dass** die Rippe (10; 32) schräg zu einer Längsachse (11) der Schraube verläuft.

3. Gewindeformende Schraube nach Anspruch 1 oder 2, **dadurch gekennzeichnet, dass** die Rippe (10) in umgekehrter Orientierung zu der Orientierung des Schraubengewindes (9) verläuft.

4. Gewindeformende Schraube nach einem der vorstehenden Ansprüche, **dadurch gekennzeichnet, dass** ein Winkel (gamma) zwischen der Rippe (10; 32) und dem Schraubengewinde (9) größer als 0 Grad und kleiner als 180 Grad ist.

5. Gewindeformende Schraube nach einem der vorstehenden Ansprüche, **dadurch gekennzeichnet, dass**, in einer Richtung vom vorderen Schraubenende (6) auf den Schraubenkopf (1) zu gesehen, die Rippe (10; 32) mit einem Abstand (A) von dem Beginn des Schraubengewindes (9) beginnt.

6. Gewindeformende Schraube nach einem der vorstehenden Ansprüche, **dadurch gekennzeichnet, dass**, in einer Richtung vom vorderen Schraubenende (6) auf den Schraubenkopf (1) zu gesehen, die Rippe (10; 32) vor dem Übergang des Formabschnitts (8) in einen zylindrischen Abschnitt (7) des Schafts (5) endet.

7. Gewindeformende Schraube nach einem der vorstehenden Ansprüche, **dadurch gekennzeichnet, dass** die Rippe (10; 32) sich über zwei bis vier Gewindegänge des Schraubengewindes (9) erstreckt.

8. Gewindeformende Schraube nach einem der vorstehenden Ansprüche, **dadurch gekennzeichnet, dass** eine Höhe der Rippe (10; 32) kleiner ist als die Höhe der Gewindegänge des Schraubengewindes (9).

9. Gewindeformende Schraube nach Anspruch 8, **dadurch gekennzeichnet, dass** eine Höhe der Rippe (10; 32) etwa halb so groß ist wie die Höhe der Gewindegänge des Schraubengewindes (9).

10. Gewindeformende Schraube nach einem der vorstehenden Ansprüche, **dadurch gekennzeichnet, dass** der Querschnitt des Schraubenschafts (5) eine trilobulare Form aufweist.

11. Gewindeformende Schraube nach einem der vorstehenden Ansprüche, **dadurch gekennzeichnet, dass** mehrere vorzugsweise gleichmäßig über den Umfang verteilte, schräg verlaufenden Rippen (10; 32) vorgesehen sind.

12. Gewindeformende Schraube nach einem der vorstehenden Ansprüche, **dadurch gekennzeichnet, dass** das vordere Schraubenende (6) abgerundet ist, insbesondere halbkugelförmig abgerundet.

## Claims

1. Thread-forming screw for screwing into ductile materials, specifically sheet metal, having a screw head (1) which has a screw-driving configuration (4), a screw shank (5) which extends from the screw head (4) to a front screw end (6), and having a screw thread (9) which is configured as a sheet-metal thread, wherein a front forming portion (8) of the screw shank (5) has a cross section that decreases in the direction of the front screw end (6), wherein the screw thread (9) reaches up to the front screw end (6), wherein at least one rib (10; 32) which cuts the screw thread (9) is configured in the forming portion (8), and wherein the rib (10; 32) runs so as to be steeper than the screw thread (9) .

2. Thread-forming screw according to Claim 1, **characterized in that** the rib (10; 32) runs obliquely to a longitudinal axis (11) of the screw.

3. Thread-forming screw according to Claim 1 or 2, **characterized in that** the rib (10) runs in an orientation that is reverse to the orientation of the screw thread (9).

4. Thread-forming screw according to one of the preceding claims, **characterized in that** an angle (gamma) between the rib (10; 32) and the screw thread (9) is greater than 0° and smaller than 180°.

5. Thread-forming screw according to one of the preceding claims, **characterized in that**, when viewed in a direction from the front screw end (6) towards the screw head (1), the rib (10; 32) begins at a spacing (A) from the beginning of the screw thread (9) .

6. Thread-forming screw according to one of the preceding claims, **characterized in that**, when viewed in a direction from the front screw end (6) towards the screw head (1), the rib (10; 32) ends ahead of the transition of the forming portion (8) to a cylindrical portion (7) of the shank (5).

7. Thread-forming screw according to one of the preceding claims, **characterized in that** the rib (10; 32) extends across two to four thread turns of the screw thread (9).

8. Thread-forming screw according to one of the preceding claims, **characterized in that** a height of the rib (10; 32) is smaller than the height of the thread turns of the screw thread (9).

9. Thread-forming screw according to Claim 8, **characterized in that** a height of the rib (10; 32) is approximately half the size of the height of the thread turns of the screw thread (9).

10. Thread-forming screw according to one of the preceding claims, **characterized in that** the cross section of the screw shank (5) has a trilobular shape.

11. Thread-forming screw according to one of the preceding claims, **characterized in that** a plurality of obliquely running ribs (10; 32) that are preferably distributed uniformly across the circumference are provided.

12. Thread-forming screw according to one of the preceding claims, **characterized in that** the front screw end (6) is rounded, in particular rounded so as to be hemispherical.

## Revendications

1. Vis autotaraudeuse destinée à être vissée dans des matériaux ductiles, à savoir des tôles, comprenant une tête de vis (1) qui présente une configuration d'entraînement de vis (4), une tige de vis (5) qui s'étend de la tête de vis (4) jusqu'à une extrémité de vis avant (6), ainsi que comprenant un filetage de vis (9), qui est réalisé sous la forme d'un filetage de tôle, un tronçon de forme avant (8) de la tige de vis (5) présentant une section transversale qui diminue en direction de l'extrémité de vis avant (6), le filetage de vis (9) atteignant l'extrémité de vis avant (6), au moins une nervure (10 ; 32) qui coupe le filetage de vis (9) étant réalisée dans le tronçon de forme (8), et la nervure (10 ; 32) s'étendant de manière plus raide que le filetage de vis (9).

2. Vis autotaraudeuse selon la revendication 1, **caractérisée en ce que** la nervure (10 ; 32) s'étend en oblique par rapport à un axe longitudinal (11) de la vis.

3. Vis autotaraudeuse selon la revendication 1 ou 2, **caractérisée en ce que** la nervure (10) s'étend selon une orientation inverse par rapport à l'orientation du filetage de vis (9).

4. Vis autotaraudeuse selon l'une quelconque des revendications précédentes, **caractérisée en ce qu'**un angle (gamma) entre la nervure (10 ; 32) et le filetage de vis (9) est supérieur à 0 degré et inférieur à 180 degrés.

5. Vis autotaraudeuse selon l'une quelconque des revendications précédentes, **caractérisée en ce que**, vue dans une direction allant de l'extrémité de vis avant (6) vers la tête de vis (1), la nervure (10 ; 32) commence à une distance (A) du début du filetage de vis (9).

6. Vis autotaraudeuse selon l'une quelconque des revendications précédentes, **caractérisée en ce que**, vue dans une direction allant de l'extrémité de vis avant (6) vers la tête de vis (1), la nervure (10 ; 32) se termine avant la transition du tronçon de forme (8) en un tronçon cylindrique (7) de la tige (5).

7. Vis autotaraudeuse selon l'une quelconque des revendications précédentes, **caractérisée en ce que** la nervure (10 ; 32) s'étend sur deux à quatre pas de filetage du filetage de vis (9).

8. Vis autotaraudeuse selon l'une quelconque des revendications précédentes, **caractérisée en ce qu'**une hauteur de la nervure (10 ; 32) est inférieure à la hauteur des pas de filetage du filetage de vis (9).

9. Vis autotaraudeuse selon la revendication 8, **caractérisée en ce qu'**une hauteur de la nervure (10 ; 32) est environ la moitié de la hauteur des pas de filetage du filetage de vis (9).

10. Vis autotaraudeuse selon l'une quelconque des revendications précédentes, **caractérisée en ce que** la section transversale de la tige de vis (5) a une forme trilobée.

11. Vis autotaraudeuse selon l'une quelconque des revendications précédentes, **caractérisée en ce que** plusieurs nervures (10 ; 32) s'étendant en oblique, de préférence réparties uniformément sur la circonférence, sont prévues.

12. Vis autotaraudeuse selon l'une quelconque des revendications précédentes, **caractérisée en ce que** l'extrémité de vis avant (6) est arrondie, notamment arrondie en forme de demi-sphère.
